# EUROPEAN PATENT APPLICATION

(11) **EP 2 383 742 A1**
(43) Date of publication of application: **02.11.2011**
(21) Application number: 11003380.0
(22) Date of filing: 21.04.2011
(51) Int. Cl.: G11B 27/10, G06F 17/30, G06Q 10/00, G06K 17/00, H04W 4/02

(54) **Inventory of an optical disks collection using smartphone and RFID**

(30) Priority: 27.04.2010 JP 2010102491
(71) Applicant: Sharp Kabushiki Kaisha, Osaka-shi, Osaka 545-8522 (JP)
(72) Inventor: Sakai, Toshihiko, Osaka-shi Osaka 545-8522 (JP); Sato, Takanobu, Osaka-shi Osaka 545-8522 (JP); Mori, Go, Osaka-shi Osaka 545-8522 (JP); Arimoto, Takashi, Osaka-shi Osaka 545-8522 (JP); Okumura, Tetsuya, Osaka-shi Osaka 545-8522 (JP); Tajima, Hideharu, Osaka-shi Osaka 545-8522 (JP); Maeda, Shigemi, Osaka-shi Osaka 545-8522 (JP)
(74) Representative: Müller - Hoffmann & Partner

(57) **Abstract**

An apparatus for stock management support includes a recording section for storing disk-rack-storage-area-information and -location-information, these localisation informations being used in an inventory software to associate a collection of optical disks of various content with their current localisation, for instance in which room and in which rack of a shelve.
Upon ejection of a disk, the inventory is updated and displayed, for instance on a smartphone.
An RF-IFD attached to the disk or to the case enables to automatise the identification and the search of disks.

## Description

### Technical Field

The present invention relates to an information managing apparatus for generating library information, a communication device that is communicable with the information managing apparatus, an information generation program, a computer-readable storage medium in which the information generation program is stored, and an information storage medium.

### Background Art

In recent years, storage of content in a removable optical disk and reproduction of such content from the optical disk have been commonly carried out.

In the old days, it was difficult to record a moving image in a single optical disk, since this requires a large recording capacity. The capacity of an optical disk has now largely increased, thereby allowing for recording of a moving image on a single optical disk. Meanwhile, a wide variety of content is distributed these days, such as a long series of dramas with 50 or more episodes. Even if a large-capacity optical disk is used, a recording capacity of such an optical disk is not enough to fully record such moving images of extremely long hours in high quality. For example, there are many cases where one drama series (from the first episode to the last episode) cannot be recorded on a single optical disk, and there is no other choice but to record the drama series on a plurality number of optical disks by splitting the series into parts.

Furthermore, together with the increase in the variety of the content, the number of types of content that are recorded on the optical disks has also increased. As a result, the number of optical disks that are stored and managed by a user tends to be increasing more and more.

Due to the increase in the number of optical disks to be stored and managed by the user, the storage management of optical disks by the user has become extremely troublesome, and is becoming more difficult than ever.

Under such circumstances, Patent Literature 1 discloses a management method employing library information. The management method is an example of a technique related to a method for managing content and an optical disk in which the content is stored in such a manner that the content and the optical disk are associated with each other.

According to the management method disclosed in Patent Literature 1, (i) library information is generated when an image is recorded on a disk or a hard disk, and (ii) the library information can be edited or displayed as necessary.

### Citation List

### Patent Literature

### Patent Literature 1

Japanese Patent Application Publication, Tokukai, No.2002-150754 A (Publication Date: May 24, 2002)

### Summary of Invention

### Technical Problem

However, the conventional management method only lists up a disk number and the like of the optical disk, which disk number corresponds to the content, and thus has a problem that no information is provided of where the optical disk that corresponds to the disk number is actually stored.

For example, it is usually difficult to visually distinguish optical disks of a single standard from each other because of their similar appearances. Therefore, even if the disk number of the optical disk on which the desired content is recorded is identified by use of the library information in accordance with the conventional management method, a storage position of that optical disk is generally not provided.

That is, the conventional management method does not fundamentally solve the problem that the storage management of optical disks is becoming more and more difficult.

The present invention is accomplished in view of the conventional problems. An object of the present invention is to provide an information managing apparatus and the like each of which allows a user to simplify storage management of a removable information storage medium.

### Solution to Problem

In order to attain the object, an information managing apparatus of the present invention, for managing where a removable information storage medium is stored, includes recording control means for carrying out control so that storage-area information is stored, the storage-area information being used to manage an information storage medium in which content is stored and a storage area in which the information storage medium is stored in such a manner that the information storage medium and the storage area are associated with each other.

This allows the user to recognize, on the basis of the storage-area information, which storage area the removable information storage medium in which the content is stored is stored in. Therefore, it is possible for the user to simplify the storage management of the removable information storage medium.

Note that the "storage area" denotes a wide concept that encompasses a room in a house, and furniture and furnishing goods provided in the room, such as a library, a disk rack, a desk, and a table.

Further, in order to attain the object, a removable information storage medium of the present invention includes, at least: a first information recording layer which allows additional recording of information or rewriting of information; and a second information recording layer which allows reading-out of information only, the first information recording layer including an information recording region in which (i) storage-area information is recordable, the storage-area information being used to manage another storage medium in which content is stored and a storage area in which the another storage medium is stored in such a manner that the another storage medium and the storage area are associated with each other and (ii) storage-location information is recordable, the storage-location information indicating a storage location that indicates where the another information storage medium is stored in the storage area, the second information recording layer storing, in advance, cabinet information which indicates a specification of a cabinet in which the another information storage medium is stored, the cabinet information being used to generate the storage-area information and the storage-location information.

The first information recording layer allows additional recording of information or rewriting of information. The first information recording layer includes the information recording region in which (i) the storage-area information is recordable, which storage-area information is used to manage another information storage medium in which content is stored and the storage area in which the another information storage medium is stored in such a manner that the another information storage medium and the storage area are associated with each other and (ii) the storage-location information is recordable, which storage-location information indicates a storage location that indicates where the another information storage medium is stored in the storage area.

On the other hand, the second information recording layer stores, in advance, the cabinet information (e.g. a product specification of a disk rack) which indicates the specification of the cabinet (e.g. the disk rack) in which the another information storage medium is stored, the cabinet information being used to generate the storage-area information and the storage-location information.

Therefore, for example, by using the information storage medium of the present invention in the information managing apparatus described above, the user can create (automatically) the storage-area information and the storage-location information by use of the cabinet information without the user carrying out troublesome operations such as an operation of creating the storage-area information and the storage-location information. Accordingly, it is possible for the user to be informed of information related to the product specification or the like, e.g., "what would it be like if the user purchases a new cabinet and places the information storage medium in it".

Further, on the basis of the storage-area information and the storage-location information which are generated based on the cabinet information, it is also possible for the user to easily find and purchase a cabinet that suits user's taste. Furthermore, the information storage medium of the present invention can be used by a furniture maker to promote sales of its products. Accordingly, it becomes possible for the user to simplify the storage management of the removable information storage medium.

### Advantageous Effects of Invention

As described above, an information managing apparatus of the present invention, for managing where a removable information storage medium is stored, includes: recording control means for carrying out control so that storage-area information is stored, the storage-area information being used to manage an information storage medium in which content is stored and a storage area in which the information storage medium is stored in such a manner that the information storage medium and the storage area are associated with each other.

Furthermore, an information storage medium of the present invention a removable information storage medium of the present invention includes, at least: a first information recording layer which allows additional recording of information or rewriting of information; and a second information recording layer which allows reading-out of information only, the first information recording layer including an information recording region in which (i) storage-area information is recordable, the storage-area information being used to manage another storage medium in which content is stored and a storage area in which the another storage medium is stored in such a manner that the another storage medium and the storage area are associated with each other and (ii) storage-location information is recordable, the storage-location information indicating a storage location that indicates where the another information storage medium is stored in the storage area, the second information recording layer storing, in advance, cabinet information which indicates a specification of a cabinet in which the another information storage medium is stored, the cabinet information being used to generate the storage-area information and the storage-location information.

Therefore, it is possible for the user to simplify the storage management of the removable information storage medium.

Additional objects, features, and strengths of the present invention will be made clear by the description below. Further, the advantages of the present invention will be evident from the following explanation in reference to the drawings.

### Brief Description of Drawings

Fig. 1

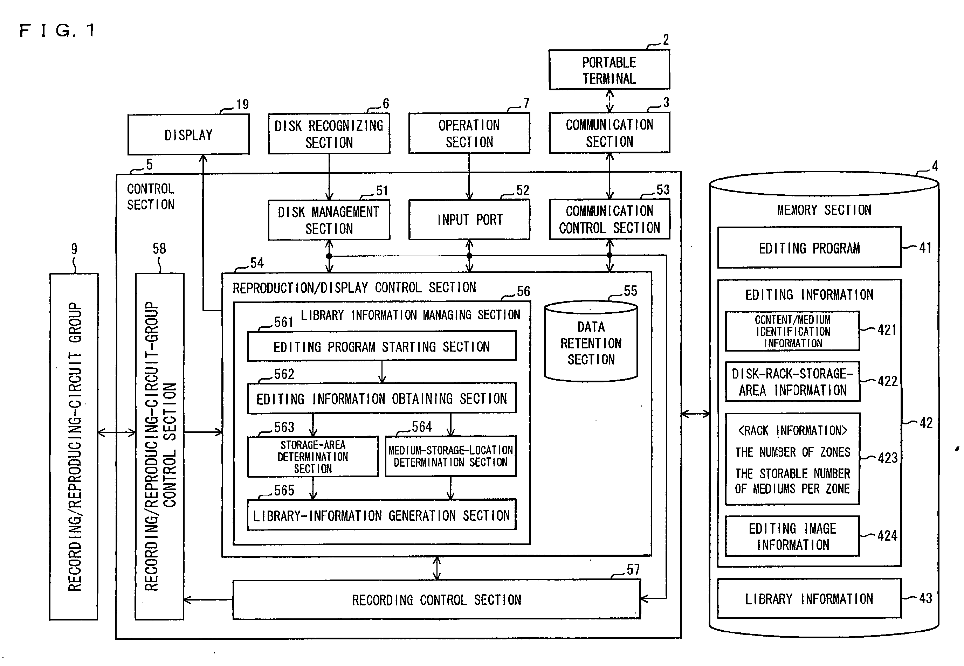

   Fig. 1 is a block diagram illustrating an arrangement of an essential part of an information managing apparatus (or a communication device) that serves as one embodiment of the present invention.
Fig. 2

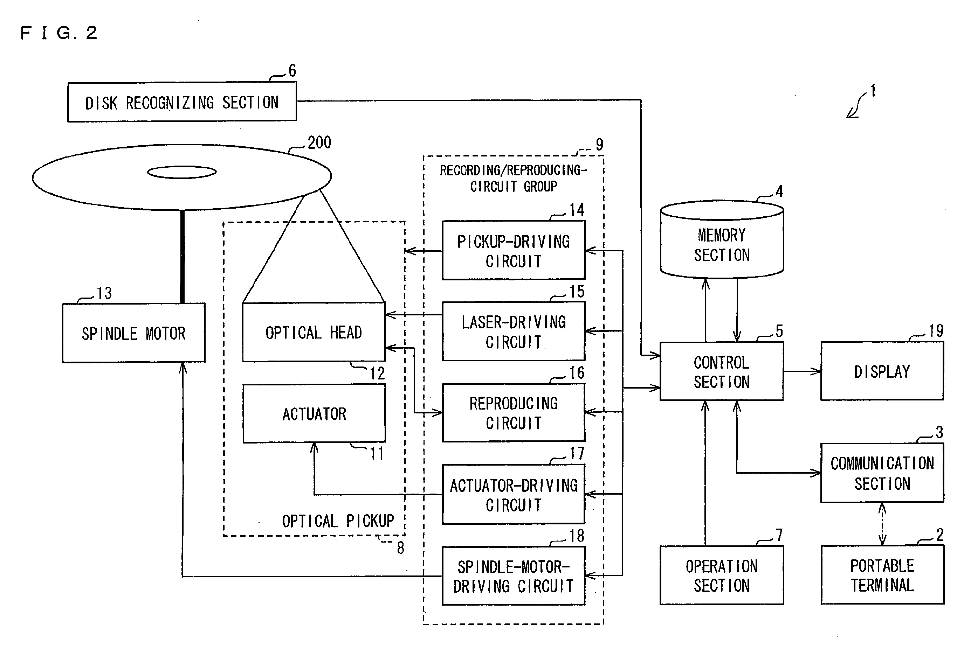

   Fig. 2 is a block diagram illustrating an entire arrangement of the information managing apparatus (or communication device).
Fig. 3

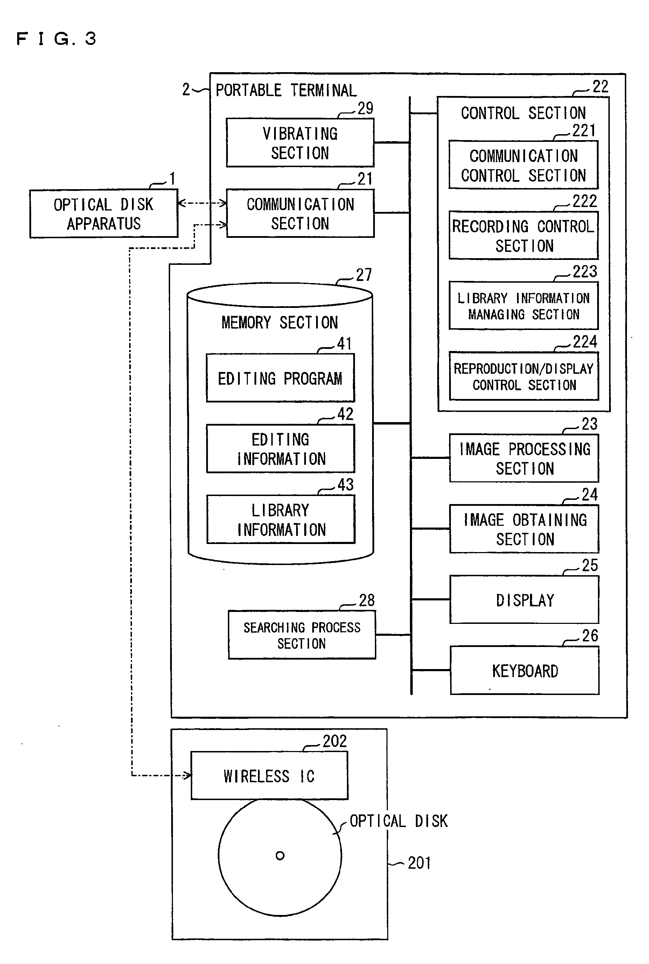

   Fig. 3 is block diagram illustrating an entire arrangement of a communication device (or information managing apparatus) that serves as another embodiment of the present invention.
Fig. 4

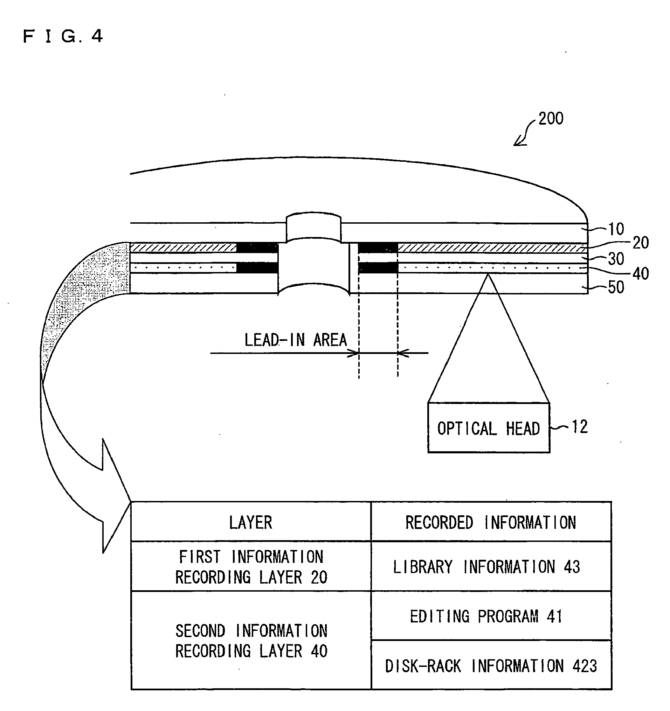

   Fig. 4 is a view illustrating (i) an arrangement of an information storage medium that serves as yet another embodiment of the present invention, and (ii) details of recorded information.
Fig. 5(a)

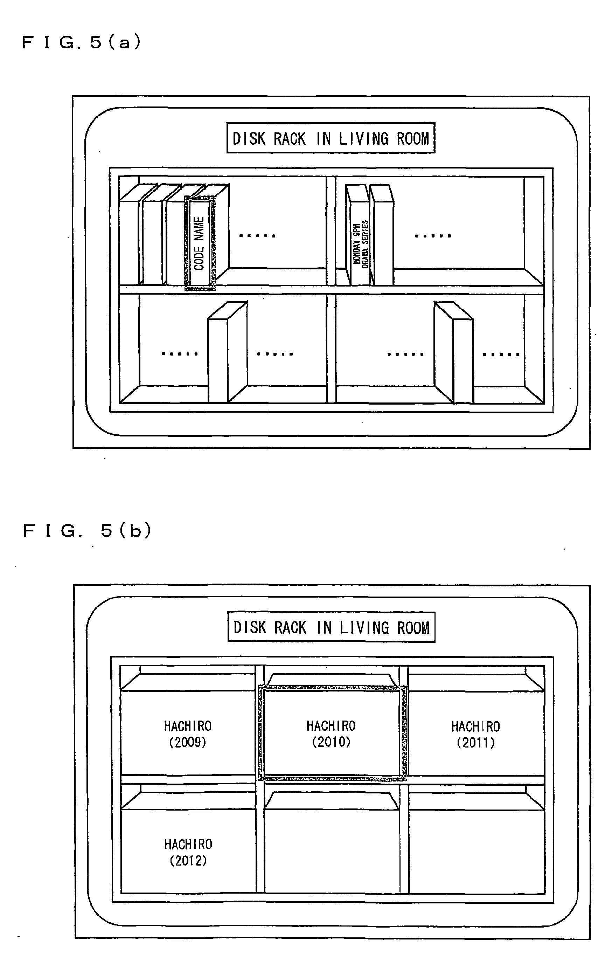

   Fig. 5(a) is a schematic view related to the information managing apparatus or the communication device, illustrating a display example of storage-area information and storage-location information.
Fig. 5(b)
   Fig. 5(b) is a schematic view illustrating another display example of the storage-area information and storage-location information.
Fig. 6(a)

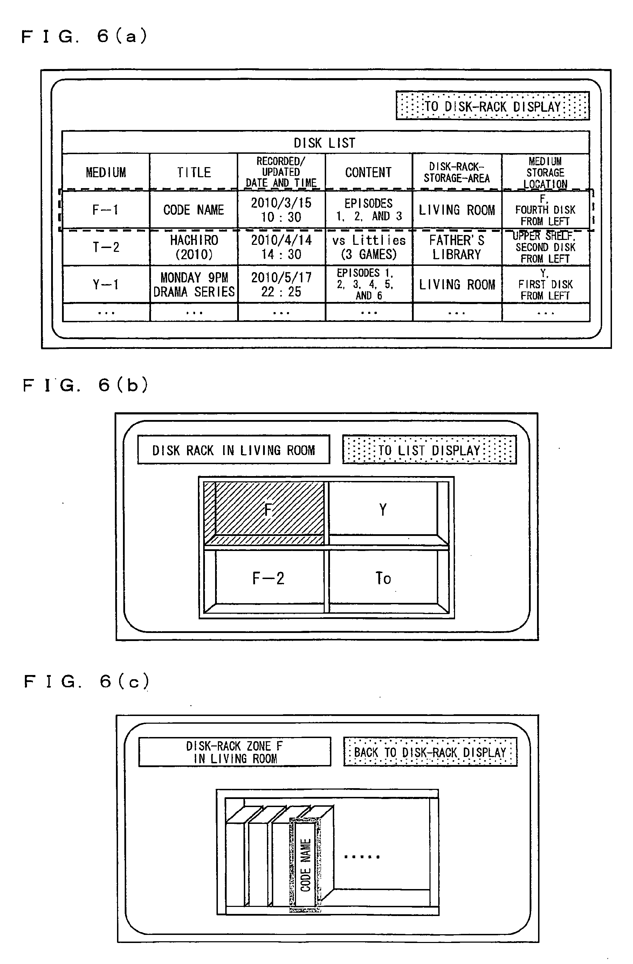

   Fig. 6(a) is a schematic view illustrating yet another display example of the storage-area information and storage-location information.
Fig. 6(b)
   Fig. 6(b) is a schematic view illustrating yet another display example of the storage-area information.
Fig. 6(c)
   Fig. 6(c) is a schematic view illustrating yet another display example of the storage-location information.
Fig. 7

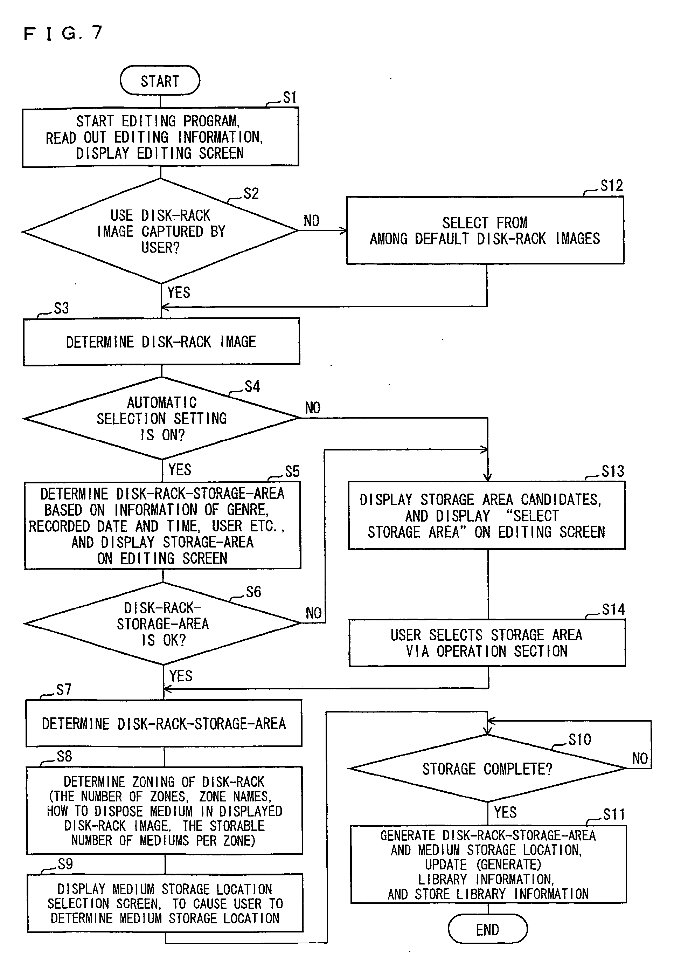

   Fig. 7 is a flowchart showing procedures carried out by the information managing apparatus (or communication device).

### Description of Embodiments

One embodiment of the present invention is described below with reference to Figs. 1 through 7.

Note that (1) it is possible to regard (a) an optical disk apparatus (information managing apparatus, communication device) 1 described below as one embodiment of the information managing apparatus in accordance with the present invention and (b) a portable terminal (an information managing apparatus, communication device) 2 as one embodiment of another communication device. Further, (2) it is also possible to regard (a) the portable terminal 2 as one embodiment of the information managing apparatus and (b) the optical disk apparatus 1 as one embodiment of another communication device.

### [1. Arrangement of optical disk apparatus 1]

The following description deals with an arrangement of an optical disk apparatus 1 with reference to Figs. 1 and 2.

Fig. 1 is a block diagram illustrating an arrangement of an essential part of the optical disk apparatus 1, and Fig. 2 is a block diagram illustrating an entire arrangement of the optical disk apparatus 1.

Initially explained is the entire arrangement of the optical disk apparatus 1 with reference to Fig. 2. Then, the arrangement of the essential part (mainly, a control section 5) of the optical disk apparatus 1 is described with reference to Fig. 1.

As illustrated in Fig. 2, the optical disk apparatus 1 includes a communication section 3, a memory section 4, a control section 5, a disk recognizing section (detection means) 6, an operation section 7, an optical pickup 8, a recording/reproducing-circuit group 9, a spindle motor 13, and a display 19.

The communication section 3 is communicable with the portable terminal 2. Examples of a communication method employable here encompass Bluetooth (registered trademark), Felica (registered trademark), PLC (power line communication), Wireless LAN (WLAN), IrDA (Infrared wireless communication), IrSS (Infrared wireless communication), WCDMA (communication network), and other wired/wireless communication networks.

In the memory section 4, various objects are stored temporarily or continuously, such as (i) various software such as an OS (Operating Software) for operating the optical disk apparatus 1, and an editing program (information generation program) 41 for generating, updating, and editing library information 43 (later described) (including disk-rack-storage-area information 422, hereinafter denoting same), and (ii) data used in processes carried out by the optical disk apparatus 1, such as editing information 42 and the library information 43.

Content/medium identification information (medium identification information) 421 includes identification information (content identification information) for identifying content, and identification information (medium identification information) for identifying optical disks (information storage medium) such as an optical disk (information storage medium) 200 later described.

In the present specification, the "content" encompasses various information that serves as targets of software processing, such as an image, a moving image, music, audio data, text data such as an e-mail and the like, data published on a web page, a photograph, a finder screen displayed when a camera is started, and broadcasting such as one-segment broadcasting, three-segment broadcasting, and terrestrial digital broadcasting. Other than these, the "content" also encompasses data accumulated in a database.

Examples of a data format and a data compression technique for the "content" encompass data formats related to music such as AAC (Advanced Audio Coding), WAV (standard file format of audio data for Windows (registered trademark), which may also be called "WAVE file" or "WAVE sound file"), and MP3 (MPEG-1 Audio Layer 3).

Moreover, other data formats and data compression techniques for a moving image and a still image encompass data formats related to a video image such as Flash (software for creating web animation, distributed by Macromedia), data formats related to a still image such as a JPEG (Joint Photographic Experts Group) format, and data formats related to compression of a moving image such as MPEG (Moving Picture Experts Group).

The MPEG system is a standard for compressing and/or decompressing a moving image and audio data, which has been recommended as a standard technique by ITU-T (International Telecommunication Union-Telecommunication Standardization Sector) and ISO (International Organization for Standardization). Currently, examples of the MPEG system encompass MPEG1 used for media such as a video and a CD (Compact Disk), MPEG2 used for a DVD (Digital versatile disc) and broadcasting media, and MPEG4 for network distribution and for a portable terminal.

Moreover, the "content" may be obtained via a broadcast. Examples of a broadcasting system by which the "content" is obtained encompass various broadcasting systems such as an NTSC (national television system committee) system, a PAL (phase alternation by line) system, an SECAM (sequential couleur a memoire system) system, an HD-MAC (high definition-multiple analogue component) system, a TV (Television) system based on an ATV (advanced television) system, a sound multiplex system, a stereophonic sound multiplex system, a satellite communication system using a radio wave from a broadcasting satellite (BS) or a communication satellite (CS), a wired broadcasting TV (cable television: CATV) system, a high image quality television (extended definition TV: EDTV) system, a high definition television (HDTV) system, an MUSE system, a one-segment broadcasting system, a three-segment broadcasting system, and a terrestrial digital broadcasting system.

Examples of the content identification information encompass a title, a recorded or updated date and time, and a sort of the content. In addition to these, examples of the content identification information further encompass a channel type and channel number, an image quality mode, an audio quality mode, bit rate information, and genre information. Here, examples of the genre information encompass Foreign Film, Japanese Film, Music, Drama, Animation and Special Effects, Sport, Documentary and Culture, Theatrical Show, Variety, Hobby and Education, News Coverage, Others, and No Genre.

Examples of the medium identification information encompass information on a type of the optical disk, and information related to an owner of the optical disk, in addition to disk identification information (such as a unique disk number; including identification of DVD <Digital Versatile Disk> - RAM <Random Access Memory>, or HDD <Hard Disk Drive>).

The disk-rack-storage-area information (storage-area information, storage-location information) 422 is information indicative of which room in a house of the user the disk rack (cabinet) in which the optical disk is stored is located. Examples of the disk-rack-storage-area information 422 encompass rooms such as a living room, a dining room, a study, a bedroom, a library, and a drawing room.

Moreover, the disk-rack-storage-area information 422 includes information indicative of where the optical disk is stored in the disk rack. Specific examples of such information will be described later.

The disk-rack information (cabinet information) 423 is information such as catalogue information which indicates a specification of the disk rack in which the optical disk is stored. In a case where the disk rack is constituted by a plurality of zones (compartments), the disk-rack information 423 includes, not just the number of zones and the storable number of optical disks per zone, but also dimensions of the disk rack and its structural elements, information on what color and/or what pattern the disk rack has, and information on how the optical disks are disposed in each zone.

The editing image information (cabinet image) 424 includes a disk-rack image (cabinet image) (later described), a medium image for schematically illustrating the optical disk (image of divisional areas, later described), and the like.

The library information 43 is stored in advance by default at the time of shipment of the optical disk apparatus 1. However, the library information 43 may be the one that is created, updated, or edited by use of the editing information 42 by causing the editing program 41 to start up.

The control section 5 illustrated in Fig. 2 includes an MPU (Micro Processing Unit) or a CPU (Central Processing Unit), a ROM (Read Only Memory) in which the OS, editing program 41 and the like are written, and an RAM allowing for providing a work area required for execution of various programs such as the OS and the editing program 41. An operation command is entered via the operation section 7 (input section of a keyboard or remote controller), and this operation command is converted into an operation signal at an input port 52. On receipt of the operation signal, the MPU or CPU of the control section 5 centrally controls the operation of the entire optical disk apparatus 1 based on the various programs stored in the ROM and by use of the RAM as the work area. Details of the control section 5 will be described later.

The disk recognizing section 6 detects insertion and ejection of the optical disk. Various sensors are exemplary of the disk recognizing section 6. Provided that the sensor can detect the insertion or ejection of the optical disk, any sensor can be used. The disk recognizing section 6 outputs a result of the detection to the control section 5 (disk management section 51) as a detection signal.

The operation section 7 is provided to allow a user to enter various operation commands into the optical disk apparatus 1 via the input port 52. The operation section 7 may be, for example, operation buttons and their interfaces.

The optical pickup 8 includes an actuator 11 and an optical head 12. Moreover, the recording/ reproducing-circuit group 9 includes a plurality of circuit groups, namely, a pickup-driving circuit 14, a laser-driving circuit 15, a reproducing circuit 16, an actuator-driving circuit 17, and a spindle-motor-driving circuit 18.

The optical disk apparatus 1 is an apparatus which (i) records information onto a target optical disk and (ii) reproduces the information from the target optical disk. Examples of the target optical disk encompass a DVD, a BD, and the optical disk 200 (later described). In the present embodiment, an optical disk is provided as an example of an information storage medium. Note, however, that the information storage medium is not limited to the optical disk. That is, the optical disk apparatus 1 may be arranged such that the recording and the reproducing can be carried out by use of various information recording media such as an SD (Secure Digital) memory card, a USB (universal serial bus) stick memory, or an externally-connected HDD.

As illustrated in Fig. 2, in the optical disk apparatus 1, the optical disk 200 is rotated by the spindle motor 13 for example, which spindle motor 13 is driven by the spindle-motor-driving circuit 18. The actuator 11 (optical pickup 8) driven by the actuator-driving circuit 17 moves so as to be close to the optical disk 200, and the optical pickup 8 moves toward a track (not illustrated) on the optical disk 200 by the pickup-driving circuit 14.

The control section 5 (recording/reproducing-circuit-group control section 58) causes the laser-driving circuit 15 of the recording/reproducing-circuit group 9 to operate and set a recording condition. Thereafter, the optical head 12 irradiates a recording part of the optical disk 200 with a laser beam for the recording, so that information is recorded on the track of the optical disk 200.

Moreover, in the optical disk apparatus 1, the control section 5 (recording/reproducing-circuit-group control section 58) causes the actuator-driving circuit 17 of the recording/reproducing-circuit group 9 to operate so as to move the actuator 11 to a position close to the optical disk 200. Then, the control section 5 causes the pickup-driving circuit 14 to operate so as to move the optical pickup 8 to a recorded part of the optical disk 200. Thereafter, the control section 5 (recording/reproducing-circuit-group control section 58) causes the laser-driving circuit 15 of the recording/reproducing-circuit group 9 to operate so as to cause the optical head 12 to irradiate the optical disk 200 with a laser beam for the reproduction.

Subsequently, reflected light detected by the optical head 12 is converted into a reproducing signal by the reproducing circuit 16, and this reproducing signal is inputted into the control section 5. This causes the optical disk apparatus 1 to reproduce the information recorded on the track of the optical disk 200. In the present embodiment, the "reproduction" denotes a wide concept, including (i) "display" of an image, a photograph, a finder screen displayed when a camera is started up, an e-mail text, a web page, and the like, and (ii) "playback" of a moving image, music, audio, and the like.

Reproduction information received from the reproducing circuit 16 is temporarily or continuously stored in a data retention section 55 or the memory section 4.

The display 19 displays image data (e.g., a disk-rack image) and the like as a result of reading-out of the library information 43 stored in the data retention section 55 or the memory section 4.

Next described are details of an arrangement of an essential part (particularly, control section 5) of the optical disk apparatus 1, with reference to Fig. 1. Fig. 1 is a block diagram illustrating the arrangement of the essential part of the optical disk apparatus 1.

As illustrated in Fig. 1, the control section 5 of the optical disk apparatus 1 includes the disk management section 51, the input port 52, a communication control section (receiving control means, transmission control means) 53, a reproduction/display control section (display control means) 54, the data retention section 55, a library information managing section (information generation means, storage-area determination means, storage-location determination means) 56, a recording control section (recording control means) 57, and the recording/reproducing-circuit-group control section 58.

The disk management section 51 receives a detection signal of the insertion or the ejection of the optical disk from the disk recognizing section 6, and then informs the control section 5 of such detection.

The input port 52 converts various operation commands into operation signals, which operation commands are entered by the user via the operation section 7, and transmits the operation signals to the control section 5.

The communication control section 53 is communicable with the portable terminal 2 via the communication section 3. The communication control section 53 transmits, in particular, all or part of the library information 43 (including a case where the disk-rack-storage-area information 422 is solely contained) to the portable terminal 2. This allows for using all or part of the library information 43 on the portable terminal 2 communicable with the optical disk apparatus 1, which library information 43 has been generated by the optical disk apparatus 1.

The reproduction/display control section 224 includes the library information managing section 56 and the data retention section 55. The reproduction/display control section 224 (i) controls the recording/ reproducing-circuit group 9 via the recording/reproducing-circuit-group control section 58 to reproduce the optical disk, (ii) reads out data recorded in the memory section 4 or in the data retention section 55, and (iii) causes the display 19 to display all or part of the library information 43 (including the case where the disk-rack-storage-area information 422 is solely contained) and the like (later described).

At a time when content is recorded on a removable optical disk, the library information managing section 56 generates, updates, or edits library information, or storing the library information in the data retention section 55 or in the memory section 4, so that the recorded content and the optical disk are associated with each other. The library information managing section 56 thus manages the library information.

Moreover, the library information managing section 56 (i) generates the disk-rack-storage-area information 422 indicative of where the optical disk in which the content is recorded is stored, and (ii) causes the disk-rack-storage-area information 422 thus generated to be included in the library information 43. That is, the disk-rack-storage-area information 422 serves as information that associates the optical disk on which the content is recorded with a storage area in which the optical disk is stored.

This allows for the user to recognize the storage area in which the optical disk in which the content is recorded is stored, on the basis of the disk-rack-storage-area information 422 included in the library information 43. Accordingly, it is possible for the user to simplify the storage management of the removable optical disk.

In the present embodiment, the "storage area" denotes a wide concept, including a room in a house, and furniture and furnishing goods provided in the room, such as a library, a disk rack, a desk, and a table.

Moreover, the library information managing section 56 may generate disk-rack-storage-area information 422 indicative of a specific storage location of the optical disk in the storage area in which the optical disk in which the content is stored is stored, which disk-rack-storage-area information 422 is information indicating where the optical disk is stored in the storage area. The disk-rack-storage-area information 422 thus generated may be included in the library information 43.

This allows for the user to know where the optical disk is stored in the storage area on the basis of the disk-rack-storage-area information 422 included in the library information 43. Hence, it is possible for the user to further simplify the storage management of the removable optical disk.

The "storage location" denotes a wide concept, including a storage location of the optical disk in a room in the house and a storage location of the optical disk in a piece of furniture or a furnishing good provided in the room, such as a library, a disk rack (cabinet), a desk, or a table. For instance, an example of the storage location of the optical disk in the room of the house may be "the north corner of the room". Moreover, an example of the storage location of the optical disk in the library provided in the room may be "the second disk from the left in a group of disks stored on the upper shelf of the library". Further, an example of the storage location of the optical disk in the disk rack may be "a fourteenth disk from the left in a group of disks stored in the right-end zone of the disk rack". An example of the storage location of the optical disk in the desk may be "third drawer from the top of the desk". An example of the storage location of the optical disk on the table may be "the north corner of the table".

The library information managing section 56 includes an editing program starting section 561, an editing information obtaining section 562, a storage-area determination section (storage-area determination means) 563, a medium-storage-location determination section (storage-location determination means) 564, and a library-information generation section (information generation means) 565.

The editing program starting section 561 reads out, from the memory section 4, the editing program 41 for editing the library information 43, and causes the editing program 41 to start up. The editing information obtaining section 562 obtains the editing information 42 from the memory section 4.

The storage-area determining section 563 may automatically determine, from among a plurality of storage areas set in advance by default, a storage area for storing the optical disk on which the content is recorded.

At this time, the library-information generation section 565 generates the disk-rack-storage-area information 422 indicative of a storage area storing the optical disk in which the content is recorded, in accordance with the storage area determined by the storage-area determining section 563, and automatically causes the generated disk-rack-storage-area information 422 to be included in the library information 43. In this way, the user does not need to carry out troublesome work such as determining the storage area manually.

The storage-area determining section 563 may determine, in accordance with a result selected by the user via the operation section 7, a storage area in which the optical disk is to be stored, from among the plurality of storage areas set in advance by default. Moreover, the storage-area determining section 563 may allow the user to determine the storage area by entering the storage area via the operation section 7. This allows the user to select a desired storage area from among a plurality of storage areas. The medium-storage-location determining section 564 may automatically determine a specific storage location for storing the optical disk from among the plurality of storage locations set in advance in the storage area in which the optical disk in which the content is stored is stored.

At this time, the library-information generation section 565 automatically generates the disk-rack-storage-area information 422 corresponding to the storage location determined by the medium-storage-location determining section 564. This makes it unnecessary for the user to carry out troublesome work such as determining the storage location manually.

Moreover, the medium-storage-location determining section 564 may determine a storage location for storing the optical disk from among the plurality of specific storage locations, in accordance with a result selected by the user via the operation section 7. This allows for the user to select a desired storage location from among the plurality of storage locations.

The reproduction/display control section (display control means) 54 may cause the library information 43 to be displayed so that a correspondence relationship between the optical disk on which the content is recorded and the storage area in which the optical disk is stored is viewable to the user. This allows the user to visually check the correspondence relationship between the optical disk on which the content is recorded and the storage area in which the optical disk is stored by viewing the library information 43 caused to be displayed on the display 19 by the reproduction/display control section 54. Therefore, the user can easily know where the optical disk in which the content is recorded is stored.

Moreover, the reproduction/display control section 54 may cause the library information 43 to be displayed so that the following two correspondence relationships are visually recognizable: (a) a correspondence relationship between the optical disk on which the content is recorded and the storage area in which the optical disk is stored and (b) a corresponding relationship between the optical disk on which the content is stored and a specific storage location in the optical disk is stored.

This allows the user to visually check (a) the correspondence relationship between the optical disk on which the content is recorded and the storage area in which the optical disk is stored and (b) the correspondence relationship between the optical disk and the specific storage location in which the optical disk is stored, by viewing the library information 43 which is caused to be displayed on the display 19 by the reproduction/display control section 54. Hence, it is possible for the user to know, more specifically, where the optical disk on which the content is recorded is stored. A specific example of the library information 43, caused to be displayed on the display 19 by the reproduction/display control section 54, will be described later.

Moreover, when receiving, from the disk management section 51, a notification that ejection of the optical disk has been detected, the reproduction/display control section 54 may cause the disk-rack-storage-area information 422 that corresponds to the ejected optical disk to be displayed. This allows the user to recognize (i) the storage area where the optical disk was originally stored and (ii) the specific storage location where the optical disk was originally stored. Therefore, it is possible to easily return the optical disk to its original storage location.

The recording control section 57 carries out control, such as (i) instructing the recording/reproducing-circuit-group control section 58 to operate the recording/reproducing-circuit group 9 so that various information such as the library information 43 is written onto the optical disk 200, and (ii) causing the memory section 4 to store the library information 43 and the like.

### [2. Arrangement of Portable terminal 2]

Next described is the arrangement of the portable terminal 2, with reference to Fig. 3. Fig. 3 is a block diagram illustrating an entire arrangement of the portable terminal 2.

The "portable terminal" denotes a portable terminal having at least one communication function (the communication function may be a function other than existing carrier networks, such as CDMA (Code Division Multiple Access)), and denotes a concept including a mobile-phone-sized PC (personal computer) with a communication function, e.g., a mobile PC which can only carry out an IP communication.

As illustrated in Fig. 3, the portable terminal 2 includes a communication section 21, a control section 22, an image processing section 23, an image obtaining section 24, a display 25, a keyboard 26, a memory section 27, a searching process section (medium searching means) 28, and a vibrating section (notification means) 29.

The communication section 21 is communicable with the optical disk apparatus 1. The communication method employable here is as described above.

The control section 22 includes a communication control section (receiving control means, transmission control means) 221, a recording control section 222 (recording control means), a library information managing section (information generation means, storage-area determination means, storage-location determination means) 223, and a reproduction/display control section (display control means) 224.

Functions of the communication control section 221, the recording control section 222, the library information managing section 223, and the reproduction/display control section 224 are similar to the respective functions of the communication control section 53, the recording control section 57, the library information managing section 56, and the reproduction/display control section 54 of the optical disk apparatus 1 illustrated in Fig. 1. Therefore, their explanations are omitted here. Moreover, each of the editing program 41, the editing information 42, and the library information 43 is also as described above.

The image processing section 23 converts image signals and the like into digital images, which image signals and the like are obtained by the image obtaining section 24 (e.g., a digital-camera built-in image obtaining section 24).

Functions of the display 25 and the keyboard 26 are similar to the respective functions of the display 19 and the operation section 7 of the optical disk apparatus 1. Therefore, their explanations are omitted here.

The memory section 27 stores a part or all of the library information 43 (including the case of solely the disk-rack-storage-area information 422). Specifically, the communication section 21 receives such library information from the communication control section 53 of the optical disk apparatus 1, and the communication control section 221 causes the memory section 27 to store such library information. As a result, it becomes possible to use the library information 43 on the portable terminal 2 without the portable terminal 2 making any change in the library information 43, which library information has been generated, updated, and edited by the optical disk apparatus 1.

The editing program 41 and the editing information 42 stored in the memory section 27 are as described above. However, the editing program 41 and editing information 42 may be stored in the portable terminal 2 in advance at the time of shipment. Alternatively, if the editing program 41 and editing information 42 are compatible with the optical disk apparatus 1, the communication control section 53 of the optical disk apparatus 1 may transmit the editing program 41 and editing information 42 to the portable terminal 2, and the communication control section 221 of the portable terminal 2 may cause the memory section 27 to store the editing program 41 and editing information 42. Note, however, that it is needless to say that consideration is required regarding copyrights and the like of the editing program 41, in transmitting and receiving the editing program 41.

The following description explains the functions of the portable terminal 2 that are different from the functions of the aforementioned optical disk apparatus 1, with reference to Fig. 3. Elements that are common between the two apparatuses are omitted here, as appropriate.

First, as illustrated in Fig. 3, it is assumed that the optical disk 200 is stored in a disk case (storage case) 201, which disk case 201 is stored in a specific disk rack (not illustrated), for example.

Moreover, the disk case 201 has a wireless IC (identification-information transmitting section) 202 provided in advance. The wireless IC 202 wirelessly transmits the disk identification information (medium identification information) for identifying the optical disk 200. The wireless IC 202 may be directly attached to the optical disk 200. Examples of the wireless IC 202 encompass Bluetooth, Felica, Zigbee (registered trademark), and RFID (Radio Frequency Identification).

The communication control section 221 of the portable terminal 2 receives the disk identification information which is wirelessly transmitted from the wireless IC 202.

Moreover, the library information managing section 223 generates the disk-rack-storage-area information 422, and updates the library information 43 received from the optical disk apparatus 1.

This allows the user to update (or generate), via the portable terminal 2, the library information 43 which includes the disk-rack-storage-area information 422. As a result, it is possible for the user to appropriately select the optical disk apparatus 1 or the portable terminal 2 to edit the library information 43. This improves convenience for the user.

On the basis of the library information 43, the searching process section 28 searches for the optical disk 200 in which the specific content is recorded from among the plurality of information storage media.

Moreover, the vibrating section (notification means) 29 vibrates (notifies the user), in a case where the optical disk 200 corresponding to the disk identification information received by the communication control section 221 is the optical disk 200 searched by the searching process section 28. Although the present embodiment provides the vibrating section 29 as an example of the arrangement for notifying a presence of the optical disk 200 to the user, the arrangement is not limited to this. It is possible to produce sound via a speaker (not illustrated) so as to inform the user of the presence of the optical disk 200.

Hence, it is possible to recognize that the optical disk 200 searched by the searching process section 28 is present within a distance in which the communication control section 221 can receive the wirelessly transmitted disk identification information.

Furthermore, by together referring to the disk-rack-storage-area information 422, it is possible to find the information storage medium in which the desired content is stored, more easily.

Moreover, the communication control section 221 of the portable terminal 2 may include a position identifying function for identifying a position of the portable terminal 2.

Hence, the storage-area determining section 563 is capable of identifying, in real time, which room (room in which the disk rack is positioned) the user is in, from a result of the identification of the position of the portable terminal 2, and automatically generates the disk-rack-storage-area information 422.

The position identification is carried out by (i) identifying an absolute position of the portable terminal 2 by use of, for example, information from a GPS (global positioning system) receiver, information from a base station such as a femto communication, and a PLC (power line communication), and thereafter (ii) retrieving the position of the portable terminal 2 through information processing by use of a reference table (information indicative of a positional relationship between the absolute position and the rooms).

### [3. Arrangement of optical disk 200 and content of recorded information therein]

Next described is an arrangement of an optical disk (information storage medium) 200 as yet another embodiment of the present invention, with reference to Fig.4. Fig. 4 is a view schematically illustrating an overview of the arrangement of the optical disk 200 of the present embodiment, and details of recorded information of the optical disk 200.

As illustrated in the upper half of Fig. 4, the optical disk 200 of the present embodiment has, from a side opposite of a plane on which reproducing light emitted from the optical head 12 is incident, a translucent layer 10, a first information recording layer (a layer which allows additional recording of information thereto or rewriting of information thereto) 20, an intermediate layer 30, a second information recording layer (a layer which allows reading-out of information therefrom only) 40, and a substrate 50. In other words, the second information recording layer 40, the intermediate layer 30, the first information recording layer 20 and the translucent layer 10 are stacked on the substrate 50 in this order from the light incident side.

Information of the first information recording layer 20 and the second information recording layer 40 can be read out with use of reproducing light.

The optical disk 200 includes only two layers as the information recording layer, namely, the first information recording layer 20 and the second information recording layer 40. However, three information recording layers or more may be included in the optical disk 200.

The first information recording layer 20 is what is called an additionally-recordable or rewritable information recording layer. The first information recording layer 20 may be either the layer which allows additional recording of information thereto only (R layer: Recordable Layer) or the layer which allows rewriting of information thereto (RE layer: RE-writable Layer).

Moreover, the second information recording layer 40 is what is called a read-only information recording layer, which allows reading-out of information therefrom only (ROM layer: Read Only Memory Layer).

Specific examples of a material and the like of each of the translucent layer 10, the first information recording layer 20, the intermediate layer 30, the second information recording layer 40, and the substrate 50 are not related to the essence of the present invention, and are therefore omitted here.

On the ROM layer, information may be recorded by having, for example, a projected and grooved pre-pit row(s) formed on an interface between different materials. For this reason, with the ROM layer, it may be expressed that information is recorded on an "information recording plane".

On the other hand, on the RE layer or the R layer, information is recorded by changing physical properties of an information recording area in a medium surface direction of the information recording layer, for example. Hence, with the RE layer or the R layer, it may be expressed that information is recorded on the "information recording area".

That is, the "information recording layer" includes the information recording area or the information recording plane as described above, and indicates, in a medium plane direction (in-plane direction of reproducing light incident plane), a predetermined range of a single film, a laminated film, or an interface between two films, which film(s) are made up of a film(s) having a specific recording property, such as a reflective film and a recording film.

Note that the present specification will become complicated if descriptions of the "information recording layer" were provided separately for the case where information is recorded on the "information recording plane" and for the case where information is recorded on the "information recording area" as described above. Therefore, regarding the "information recording layer", the present specification principally uses the term of "information recording area" (e.g., "the information is recorded in the information recording area of the information recording layer").

Further, information recorded onto the optical disk 200 is a concept encompassing cases such as (a) a case where information is recorded in advance on the optical disk 200 at the time of shipment, (b) a case where information is recorded by the user after the optical disk 200 has been distributed, and (c) a case where information is recorded by the operation of the optical disk apparatus 1 as described above after the optical disk 200 has been distributed.

In other words, the optical disk 200 is what is called a hybrid optical information storage medium, in which information recording layers of different recording properties such as the ROM layer, RE layer and R layer are laminated.

Moreover, the description of "allowing additional recording of information only" means that the reading-out of information is possible, but as to the recording of information, just the additional recording is possible.

Next described is information (data) recorded in the information recording area of each of the first information recording layer 20 and the second information recording layer 40 of the optical disk 20, with reference to the lower half of Fig. 4.

The first information recording layer 20 includes an information recording area which is capable of recording the library information 43 (including the disk-rack-storage-area information 422).

Meanwhile, on the second information recording layer 40, the rack information (cabinet information) 423 and the editing program 41 have been recorded in advance.

The rack information 423 is information used to update (generate, edit) the library information 43, and may be information indicative of a specification of a disk rack in which the optical disk is stored, for example.

Hence, by using the optical disk 200 in the optical disk apparatus 1, for example, it is possible to update the library information 43 by use of the rack information 423 without requiring the user to carry out troublesome work such as updating the library information 43. As a result, it is possible to obtain information related to the specification of the product such as "what would it be like if the disk rack is replaced with a new disk rack and the optical disk are redisposed".

Moreover, the user can easily find and purchase a disk rack that suits user's taste, by use of the library information 43 updated based on the rack information 423. Moreover, for the furniture makers, the optical disk 200 may serve as a sales promotion item for their own products. Hence, it is possible for the user to simplify the storage management of the removable optical disk, as a result.

### [4. Specific example of how to display library information 43]

Next described is a specific example of how to display the library information 43 with reference to (a) and (b) of Fig. 5.
(a) of Fig. 5 is a view schematically illustrating an example of how to display the disk-rack-storage-area information 422 of the library information 43.

The example illustrated in (a) of Fig. 5 shows an image (a cabinet image which is an image of the disk rack in which the optical disk is stored) of a disk rack placed in a living room. According to the example, the disk rack has four zones, namely, an upper-left zone, a lower-left zone, an upper-right zone, and a lower-right zone.

Further, each of the zones is divided into a plurality of divisional areas in accordance with the number of the optical disks storable in that zone. In each of the zones, a storage location of an optical disk is virtually indicated by a position of a corresponding specific divisional area.

According to the example illustrated in (a) of Fig. 5, the disk rack and a disk case 201 are displayed in a three-dimensional manner. For this reason, each divisional area may have a shape other than a rectangular shape. The shape of each divisional area is determined in accordance with a display method, as appropriate.

A fourth optical disk from the left in the upper-left zone is displayed as being labeled with "Code Name", which is a title of its content. Further, a first optical disk from the left in the upper-right zone is displayed as being labeled with "MONDAY 9:00 PM DRAMA SERIES", which is a title of its content.

As described above, the display 19 of the optical disk apparatus 1 or the display 25 of the portable terminal 2 displays a screen so that the user can easily understand how the disk rack and the storage location of each optical disk are related to each other.

Accordingly, the user can recognize roughly a storage location of a desired optical disk by viewing such a screen. This allows the user to quickly find such a desired optical disk.

In the example illustrated in (a) of Fig. 5, the optical disk displayed as being labeled with the title of "Code Name" is surrounded by a boldface-type frame. This indicates that the optical disk is the desired information storage medium. Note that this is an example of the storage-location information showing, for each of the zones, where the optical disk is stored more specifically.

As described above, it is possible to (i) divide, into a plurality of divisional areas, each of the zones of the disk rack for storing the optical disk in which content is stored, each of the plurality of divisional areas virtually indicating a specific storage location, and (ii) cause the user to select one of the plurality of divisional areas so that the selected divisional area is displayed in a manner different from the other divisional areas among the plurality of divisional areas.

Here, in a case where the divisional area corresponding to the optical disk displayed as being labeled with the title of "Code Name" is clicked (although it is not illustrated), part of or all of the library information 43 other than the title is simultaneously displayed or sequentially displayed in accordance with the number of times the divisional area is clicked.

According to the display method described above, it becomes possible for the user to virtually recognize a specific storage location of a target optical disk in the actual disk rack, on the basis of the position where the divisional area is displayed on the image area of the disk-rack image. It is thus possible for the user to easily find a desired optical disk from the disk rack by use of the disk-rack image.

Next, the following description deals with another example of how to display the disk-rack image with reference to (b) of Fig. 5.

In the example illustrated in (b) of Fig. 5, an image of a disk rack that is placed in a living room is displayed. According to the example, the disk rack is divided into 6 divisional areas in advance, the number of which corresponds to the number of optical disks storable in the actual disk rack. A specific storage location of an optical disk is virtually indicated by a specific divisional area. Note, however, that, unlike the display example illustrated in (a) of Fig. 5, the disk rack is displayed such that a top surface of each optical disk faces in a front direction with respect to the user in each of the divisional areas. As described above, it is possible to appropriately determine, per disk rack or per zone, not only (i) how many optical disks are placed but also (ii) how to display such optical disks (displaying the optical disks such that the top plane of each of the optical disks faces in the front direction or the horizontal direction with respect to the user, or displaying them in an overlapping manner).

According to the example illustrated in (a) of Fig. 5, a size of each of the plurality of divisional areas is so small that only few characters such as "Code Name" can be displayed. In contrast, according to the display method of the example illustrated in (b) of Fig. 5, a size of each of the plurality of divisional areas is relatively large as compared with the example illustrated in (a) of Fig. 5 so that more characters can be displayed than the example illustrated in (a) of Fig. 5.

Note that, in the example illustrated in (b) of Fig. 5, a second divisional area from the left on the upper shelf is displayed as being labeled with a title of "HACHIRO (2010)", and is surrounded by a boldface frame. That is, the position of the divisional area virtually shows a specific storage location of the searched optical disk.

Next, the following description (i) deals with list information which is still another example of how to display the library information 43, with reference to (a) of Fig. 6, and then (ii) explains how to switch the display of the library information 43 to another display of the library information 43, with reference to (a) through (c) of Fig. 6.

As illustrated in (a) of Fig. 6, the library information 43 can be displayed as a data table which is divided into a plurality of areas in a tabular manner (in matrix).

Note that it is preferable to have an arrangement in which the user can search for target information contained in the library information 43 or sort out information contained in the library information 43 via either the optical disk apparatus 1 or the portable terminal 2. Further, it is preferable to appropriately adjust a display range of the library information 43 so that a field containing the searched information must be displayed in the display screen among information contained in the library information 43.

This makes it possible to display more pieces of information related to the specific optical disk, even if the size of the display screen is small.

According to the example illustrated in (a) of Fig. 6, pieces of information, namely a medium, a title, a record/update date, content, a disk-rack storage area, and a medium storage location, are displayed from the left to the right.

Note that, in the example illustrated in (a) of Fig. 6, the field of "Medium F-1" is surrounded by a doted-line frame. This indicates that "Medium F-1" corresponds to the optical disk that is searched as described above. Here, "Code Name" is a title, "2010/3/1510:30" is the record/update date, "EPISODES 1, 2, and 3" is the recorded content (content), "Living Room" is the disk-rack-storage-area information 422 (disk-rack storage area), "F" is a name of a corresponding zone of the disk rack, and "Fourth Disk from the Left" is disk-rack-storage-area information 422 (medium storage location) indicating that "Medium F-1" is stored in the fourth position from the left in the zone F.

In the same manner, the disk-rack-storage-area information 422 of "Medium T-2" is constituted by (i) "Father's Library", which is information on where the disk rack is placed (storage-area information) and (ii) "Upper Shelf" and "Second Disk from the Left", which show a specific storage location (storage-location information) of "Medium T-2" in the disk rack (see (b) of Fig. 5).

Further, the disk-rack-storage-area information 422 of "Medium Y-1" is constituted by (i) "Living Room", which is information on where the disk rack is placed and (ii) "Y (name of the zone)" and "First Disk from the Left", which show a specific storage location (storage-location information) of "Medium Y-1" in the disk rack (see (a) of Fig. 5).

Here, an icon of "Display Disk Rack" is displayed in an upper-right part of (a) of Fig. 6. In a case where the icon is clicked, the display illustrated in (a) of Fig. 6 is switched over to the display (disk-rack display) illustrated in (b) of Fig. 6.

Next, in the example illustrated in (b) of Fig. 6, the image of the disk rack placed in the living room is displayed. In this example, the disk rack is divided into four zones, namely, an upper-left zone, a lower-left zone, an upper-right zone, and a lower-right zone.

Here, an icon of "Display List" is displayed in an upper-right part of (b) of Fig. 6. In a case where the icon is clicked, the display illustrated in (b) of Fig, 6 is switched over to the display (list display) illustrated in (a) of Fig. 6.

Note that an icon of "Disk Rack in Living Room" is displayed in an upper-left part of (b) of Fig. 6. This is an example of a storage area display indicating that the disk rack is placed (exists) in the living room.

Further, in the example illustrated in (b) of Fig. 6, the upper-left zone F (here, "F" indicates a name of the zone, which can be determined by default in advance or determined by the user) is displayed as being shaded with oblique lines. Such a display is caused by the user by clicking the zone F to select the zone F.

Here, in a case where the icon of the zone F is clicked, the display illustrated in (b) of Fig. 6 is switched over to the display (enlarged display) illustrated in (c) of Fig. 6.

Further, an icon of "Return to Disk-rack Display" is displayed in an upper-right part of (c) of Fig. 6. In a case where the icon is clicked, the display illustrated in (c) of Fig. 6 is switched over to the display (rack display) illustrated in (b) of Fig. 6.

As described above, it is preferable to have an arrangement in which a scale ratio of the disk-rack image can be adjusted, as appropriate.

Note that an icon of "Disk Rack in Living Room (Zone F)" is displayed in an upper-left part of (c) of Fig. 6. This is another example of the storage area display indicating that the disk rack is placed (exists) in the living room. This also indicates that the zone F is displayed among the plurality of zones of the disk rack.

Further, in the display example illustrated in (c) of Fig. 6, a part of the optical disk 200, displayed as being labeled with the title of "Code Name", is surrounded by a boldface frame. This indicates that the optical disk 200 is the desired information storage medium. This also serves as an example of the storage-location information indicating the storage location of the optical disk 200.

### [5. How optical disk apparatus 1 or portable terminal 2 operates]

Next, the following description deals with how the optical disk apparatus 1 or the portable terminal 2 operates with reference to Figs. 1 through 3, and 7.

Here, the operation of the optical disk apparatus 1 is explained below, but, as a matter of course, this operation also applies to the portable terminal 2.

First, the optical disk apparatus 1 is turned on. This causes a process to proceed from "START" to Step S1 (hereinafter, the term of "Step" is omitted in the present specification for the sake of simple explanation).

In S1, the editing program start-up section 561 illustrated in Fig. 1 reads out the editing program 41 from the memory section 4, and causes the editing program 41 to start up. Further, the editing program start-up section 561 reads out the editing information 42, and causes the data retention section 55 to temporarily store the editing information 42. Furthermore, the editing program start-up section 561 causes the display 25 to display an editing screen for editing the library information 43. Then, the process proceeds to S2.

In S2, a message of "Use Disk-rack Image Captured by User?" is displayed on the editing screen. In a case where the user enters "YES" via the operation section 7, the editing information obtaining section 562 (i) reads out the editing image information 424 from the editing information 42 that is temporarily stored in the data retention section 55, i.e. an disk-rack image or the like captured in advance by the user by use of, for example, a digital camera, and then (ii) causes such a disk-rack image to be displayed on the editing screen. Note that in a case where there are a plurality of disk-rack images, a desired one of the plurality of disk-rack images is selected by the user via the operation section 7. Then, the process proceeds to S3. On the other hand, in a case where "NO" is entered in S2, the process proceeds to S12. In S12, a plurality of default disk-rack images are displayed, and a desired one of the plurality of default disk-rack images is selected by the user. Then, the process proceeds to S3.

In S3, "Disk-rack Image" is determined, and data of the determined "Disk-rack Image" is transmitted to both of the storage-area determining section 563 and the medium-storage-location determining section 564. Then, the process proceeds to S4.

In S4, the storage-area determining section 563 and/or the medium-storage-location determining section 564 checks whether or not "Automatic Selection Setting is ON?". In a case where it is judged that the automatic selection setting is in the ON state (YES in S4), the process proceeds to S5. On the other hand, in a case where it is judged that the automatic selection setting is in the OFF state ("NO" in S4), the process proceeds to S 13.

In S5, the storage-area determining section 563 (i) determines the storage area of the disk rack on the basis of information such as a category, a recorded date and time, and the user, and (ii) causes the storage area to be displayed on the editing screen. Then, the process proceeds to S6.

In S6, a message of "Storage Area of Disk Rack is OK?" is displayed. In a case where the user enters "YES" via the operation section 7, the process proceeds to S7. On the other hand, in a case where the user enters "NO" in S6, the process proceeds to S 13.

In S7, the "Disk-rack Storage Area" is determined, and data of the determined "Disk-rack Storage Area" is transmitted to the medium-storage-location determining section 564. Then, the process proceeds to S8. On the other hand, in S13, the storage-area determining section 563 causes the display 19 to display a plurality of storage area candidates, and also causes a message of "Select Storage Area" to be displayed on the editing screen. Then, the process proceeds to S14. In S14, the user selects one of the plurality of storage area candidates via the operation section 7. Then, the process proceeds to S7.

Next, in S8, the medium-storage-location determining section 564 determines zoning (the number of zones, a name of each of the zones, how to arrange the media in the displayed disk-rack image, the number of media storable in each of the zones). Then, the process proceeds to S9.

In S9, the medium-storage-location determining section 564 causes the display 19 to display the "Medium Storage Location Selection Screen", and one of the plurality of medium storage locations is selected by the user. The medium-storage-location determining section 564 is notified of the determination via the operation section 7. Then, the process proceeds to S10. Here, it is possible to have an arrangement in which (i) a specification such as a size of the actual disk rack, a size of each of the actual zones, etc., are extracted from the rack information 423, and (ii) in a case where the user selects, via the editing screen, how to place the optical disk and where to place the optical disk, a medium image corresponding to the optical disk is automatically added to the disk-rack image with the same ratio as a ratio of the actual optical disk to the actual disk rack.

In S10, a message of "Storage Complete?" is displayed on the "Medium Storage Location Selection Screen" so as to determine whether or not the user has stored the optical disk at the storage location. In a case where the user enters "YES", the process proceeds to S11. On the other hand, in a case where the user enters "NO", the operation becomes a stand-by state, and the process returns to S 10.

In S11, the storage-area determining section 563 and the medium-storage-location determining section 564 generate the disk-rack-storage-area information 422. The library-information generation section 565 causes the generated disk-rack-storage-area information 422 to be included in the library information 43 so as to update (generate) the library information 43. Then, the library-information generation section 565 causes the library information 43 to be stored in the memory section 4. Then, the process finally proceeds to "END".

Lastly, each of the blocks of the optical disk apparatus 1 and each of the blocks of the portable terminal 2, particularly the control section 5 and the control section 22, can be constituted by a hardware logic or realized by software by use of a CPU as described below.

That is, each of the optical disk apparatus 1 and the portable terminal 2 includes: the CPU (central processing unit) which executes an instruction of a control program realizing each of the functions described above; a ROM (read only memory) in which the program is stored; a RAM (random access memory) which develops the program; a storage device (storage medium), such as a memory, in which the program and various kinds of data are stored; and the like. Further, the object of the present invention can be achieved in the following manner: (i) a storage medium for computer-readably storing a program code (an execute form program, intermediate code program, or source program) of each of the optical disk apparatus 1 and the portable terminal 2, which is software for implementing the aforementioned functions, is provided to each of the optical disk apparatus 1 and the portable terminal 2, and (ii) a computer (or a CPU or a MPU (Micro processing unit)) of each of the optical disk apparatus 1 and the portable terminal 2 reads out the program code stored in the storage medium so as to execute the program.

Examples of the storage medium encompass: tapes, such as magnetic tapes and cassette tapes; disks including magnetic disks, such as floppy disks (registered trademark) and hard disks, and optical disks, such as CD-ROMs (Compact Disc Read-Only Memories), MOs (Magneto-optic Disks), MDs (Magnetic Disks), DVDs (Digital Video Disks), and CD-Rs (CD Recordable); cards, such as IC cards (including memory cards) and optical cards; and semiconductor memories, such as mask ROMs, EPROMs (Erasable Programmable ROM), EEPROMs (Electrically Erasable Programmable ROM), and flash ROMs.

Further, in a case where the system is connectable to a communication network such as the Internet, it is preferable that the storage medium is the one which can flexibly obtain the program by downloading the program via the communication network.

Further, in the case where the program is downloaded via the communication network as described above, it is preferable that a program for the downloading has been stored in the main device in advance or is installed on the main device via another storage medium.

Further, each of the optical disk apparatus 1 and the portable terminal 2 can be made connectable to a communication network, and the program code can be supplied via the communication network. The communication networks are not limited to specific means. Examples of the communication network encompass the Internet, an intranet, an extranet, a LAN (Local Area Network), an ISDN (Integrated Services Digital Network), a VAN (Value-Added Network), a CATV (Cable television Service) communication network, a virtual private network, a telephone line network, a mobile communication network, a satellite communication network, and the like. Furthermore, a transmission medium constituting the communication network is not particularly limited. Specifically, it is possible to use a wired line such as a line in compliance with an IEEE (Institute of Electrical and Electronic Engineers) 1394 standard, a USB line, a power line, a cable TV line, a telephone line, an ADSL (Asymmetrical Digital Subscriber Line) line, and the like, as the transmission medium. Moreover, it is possible to use (i) a wireless line utilizing an infrared ray used in IrDA (Infrared Data Association) and a remote controller, (ii) a wireless line which is in compliance with a Bluetooth standard (registered trademark) or an IEEE802.11 wireless standard, and (iii) a wireless line utilizing an HDR (High Data Rate), a mobile phone network, a satellite line, a terrestrial digital network, and the like, as the transmission medium. Note that the present invention can be realized as a computer program encoded in a computer-readable storage medium. The computer program realizes the function of each of means of the information managing apparatus, in a case where the computer-readable storage medium is supplied to a computer and is carried out by the computer.

Further, the present invention can be expressed as described below.

That is, an information recording/reproducing apparatus includes a list information managing section for managing list information (library information) which manages (i) information on content (a tile of the content etc.) stored in a removable information storage medium and (ii) a storage area of the removable information storage medium. This allows a user to simplify management of the storage medium.

The storage location of the information storage medium can be determined either by the information recording/reproducing apparatus or by the user.

Causing a screen to display an image of the information storage medium in a position corresponding to the storage area of the information storage medium allows the user to easily identify the information storage medium.

Further, by causing the list information to be stored in a remote controller or a mobile phone (communication device), it is possible to reduce a required capacity of a memory section of the information recoding/ reproducing apparatus. This also allows the user to edit the list information wherever the user is.

In a case where the user causes the information storage medium to be ejected from the information recording/reproducing apparatus, the information recording/reproducing apparatus displays (i) information on where the information storage medium was originally stored before it was inserted into the information recording/reproducing apparatus or (ii) information on a disk case in which the information storage medium was originally stored before the information storage medium was inserted into the information storage medium. This makes it possible for any user to easily return the information storage medium to the position where it was originally stored. The display information may be only the title of the content of the information storage medium.

Further, the information recording/ reproducing apparatus includes a detection section for detecting an output signal received from an IC chip or the like attached to the disk case of the information storage medium. This makes it possible to automatically detect the position of the information storage medium.

### <Configuration of information recording/reproducing apparatus (information managing apparatus)>

(1) A list information managing section for managing list information of a removable information storage medium, which list information managing section includes an information recoding/reproducing mechanism (BD driving section) and a recordable section (an internal memory, an SD memory card, an HDD, or the like).
(2) A signal output section for outputting the list information to a display device (display).

Note that, in addition to the information recording/reproducing apparatus, examples of the information managing apparatus encompass (i) a BD recorder which can manage a BD disk created by carrying out recording, copying, or moving, and (ii) a BD recorder-built-in TV.

### <Basic operation of information recording/ reproducing apparatus (information managing apparatus)>

(1) Information is recorded on a removable information storage medium.
(2) Information on content stored in the information storage medium and medium information including location information of the information storage medium are stored in the list information storage section.
(3) List information is outputted to the display device.

### <Initialization of list information>

(1) A disk rack is determined (from among a disk-rack photograph(s) taken by the user or a plurality of default disk-rack images).
(2) A location of the disk rack is determined (e.g., a living room, or a library room).
(3) Zoning of the disk rack is determined (the number of zones, a name of each of the zones, and the like).

How many disks are placed and/or how to place ((i) vertically, (ii) horizontally, or (iii) in an overlapping manner, for example) such disks is determined for each of the zones, for example.

Further, it is possible that (i) the user enters a size of the actual disk rack and a size of each of the actual zones in advance, and (ii), in a case where the user selects (a) how to place the disk and (b) where to place the disk, the apparatus automatically causes the list information (the disk-rack image) to include the image of the disk with the same scale ratio as a ratio of the size of the actual disk to the size of the actual disk rack.

### <Other operations based on basic operation>

(1) The user uses a user's cabinet for an information storage medium, and a storage location of the information storage medium is displayed. This allows the user to further simplify the storage management of the information storage medium.
(2) A storage location is determined by the information recording/reproducing apparatus or the user.
(3) When the user causes the information storage medium to be ejected from the information recording/reproducing apparatus, the information recording/reproducing apparatus displays (i) information on where the information storage medium was originally stored before the information storage medium was inserted into the information recording/reproducing apparatus or (ii) information on a disk case in which the information storage medium was originally stored before the information storage medium was inserted into the information recording/ reproducing apparatus.
(4) List information is transmitted to a mobile phone. The user takes a photograph of the cabinet in a user's house, and causes the information recording/reproducing apparatus to display the image of the cabinet so that it looks like the information storage medium is actually stored in the cabinet. For example, the user searches for the disk (information storage medium) in which desired content has been stored, and causes the display screen to display the image of the disk in the image of the disk rack (it is also possible to use the photograph taken by the user by use of a digital camera).
(5) The information recording/reproducing apparatus includes detection means for detecting an output signal received from storage medium identification means that is attached to the information storage medium or the disk case for storing the information storage medium. The information recording/reproducing apparatus automatically identifies the location of the information storage medium.

### <Effects>

(1) It becomes possible to easily manage the removable information storage medium (there is no need to write or attach any description on the information storage medium).
(2) The information recording/reproducing apparatus displays a screen so that the image of the cabinet looks like the actual user's cabinet. Therefore, it is easy for the user to recognize the position of the information storage medium.
(3) Since the information recording/ reproducing apparatus automatically manages the information storage medium, it is possible to omit procedures in the management of the information storage medium.

Further, the present invention can be expressed as described below.

That is, an information recording/reproducing apparatus (information managing apparatus) of the present invention including first recording means for causing information to be stored in a removable information storage medium may include list information management means for managing list information of the information storage medium in which the information has been stored.

Further, in the information recording/reproducing apparatus of the present invention, the list information may include storage-location information of the information storage medium.

Further, the information recording/ reproducing apparatus of the present invention may further include storage-location determination means for determining a storage location of the removable information storage medium.

Furthermore, in the information recording/reproducing apparatus of the present invention, a storage location selection program (library-information generation program) for allowing a user to select the storage location of the removable information storage medium may be installed in a memory section of the information recording/reproducing apparatus.

Moreover, the information recording/ reproducing apparatus of the present invention may further include (i) information display section for displaying information so that the information is viewable to the user, and (ii) display control means for causing the information display means to display the list information so that the storage location of the information storage medium is recognizable from the storage-location information of the information storage medium, displayed on the information display section.

Further, the information recording/ reproducing apparatus may further include transmission control means for transmitting the list information to another communication terminal.

Furthermore, the information recording/ reproducing apparatus of the present invention may further include display control means which, in a case where a signal for ejecting the removable information storage medium is entered, outputs at least part of information on the information storage medium to a display device.

Moreover, the information recording/reproducing apparatus of the present invention may further include medium location detecting means for detecting an output signal received from storage medium identification means that is attached to the information storage medium or a disk case for storing the information storage medium therein.

Further, an information storage medium of the present invention may include (i) a recording layer which allows recording of the list information (additional recording or rewriting), and (ii) a reproduction-only layer (a layer which allows reading-out of information only) in which a program for managing the list information is stored.

Further, the information storage medium of the present invention may include (i) a recording layer which allows recording of the list information by first recording means and (ii) a reproduction-only layer in which storage equipment information on storage equipment for storing the information storage medium is stored. It is possible to (i) store, in the reproduction-only layer in advance, catalogue information of products of a furniture maker or the like, which deals with the storage equipment for storing the information storage medium, and (ii) store, in the recording layer, the list information and information on "what would it be like if the storage equipment is replaced with new storage equipment and the information storage medium is placed in the new storage equipment". A size and the like of the storage equipment are stored in the reproduction-only layer so that the user can easily check a variety of patterns as to "what would it be like if the storage equipment is replaced with new storage equipment and the information storage medium is placed in the new storage equipment". Accordingly, the user can easily find and purchase the storage equipment that suits user's taste, and the furniture maker can promote sales of its products.

Further, the present invention can be expressed as described below.

That is, an information managing apparatus of the present invention may include information generation means for generating library information that is used to manage a removable information storage medium and content stored in the removable information storage medium in such a manner that the removable information storage medium and the content are associated with each other when the content is stored in the removable information storage medium, and the information generation means may (i) generate storage-area information indicating a storage area for storing the removable information storage medium in which the content has been stored and (ii) cause the generated storage-area information to be included in the library information.

This allows the user to check the storage area in which the removable information storage medium having the content is stored on the basis of the storage-area information included in the library information. Therefore, it becomes possible for the user to simplify the storage management of the removable information storage medium.

Further, the information managing apparatus of the present invention may further include storage-area determination means for determining, from among a plurality of storage areas set in advance, the storage area in which the removable information storage medium in which the content is stored is stored, and the information generation means may generate storage-area information corresponding to the storage area determined by the storage-area determination means.

This makes it possible for the user not to carry out troublesome operations such as determination of the storage area.

Furthermore, the information managing apparatus of the present invention may be arranged such that, in accordance with selection made by the user, the storage-area determination means determines, from among the plurality of storage areas, the storage area in which the removable information storage medium in which the content is stored is to be stored.

This allows the user to select a desired storage area from among the plurality of storage areas.

Moreover, the information managing apparatus of the present invention may include display control means for carrying out control to display the library information so that a correspondence relationship between the removable information storage medium in which the content is stored and the storage area in which the information storage medium is stored is viewable to the user.

This allows the user to easily check where the removable information storage medium in which the content is stored is stored.

Further, the information managing apparatus of the present invention may be arranged such that the information generation means generates storage-location information indicating a storage location of the removable information storage medium in which the content is stored, and causes the generated storage-location information to be stored in the library information.

This allows the user to simplify the storage management of the removable information storage medium.

Furthermore, the information managing apparatus of the present invention may further include storage-location determination means for determining, from among a plurality of storage locations set in advance in the storage area in which the removable information storage medium in which the content is stored is stored, the storage location in which the removable information storage medium in which the content is stored to be stored, and the information generation means may generate the storage-location information corresponding to the storage location determined by the storage-location determination means.

This allows the user not to carry out troublesome operations such as determining the storage location.

Further, the information managing apparatus of the present invention may be arranged such that, in accordance with selection made by the user, the storage-location determination means determines, from among the plurality of storage locations, the storage location in which the removable information storage medium in which the content is stored is to be stored.

This allows the user to select a desired storage location from among the plurality of storage locations.

Furthermore, the information managing apparatus of the present invention may include display control means for carrying out control to display the library information so that (i) a correspondence relationship between the removable information storage medium in which the content is stored and the storage area in which the removable information storage medium is viewable to the user and (ii) a correspondence relationship between the removable information storage medium and the storage location in which the removable information storage medium is stored is viewable to the user.

This allows the user to know specific location in which the removable information storage medium in which the content is stored is stored.

Moreover, the information managing apparatus of the present invention may be arranged such that the information generation means (i) generates an image of a cabinet in which the removable information storage medium in which the content is stored is stored, which cabinet is placed in the storage area in which the removable information storage medium is stored, (ii) divides an image region of the image of the cabinet into a plurality of divisional areas in accordance with the number of removable information storage media storable in the cabinet, (iii) generates a storage-location image in which one of the plurality of divisional areas is displayed in a manner different from the other ones of the plurality of divisional areas, the one of the plurality of divisional area being selected from among the plurality of divisional areas as the one virtually indicating the storage location in the cabinet, in which the removable information storage medium in which the content is stored is stored, and (iv) determines the storage-location image thus generated as the storage-location information.

This allows the user to virtually recognize the storage location of the removable information storage medium in the actual cabinet on the basis of the position of the divisional area in the image region of the cabinet thus displayed. Therefore, it is possible for the user to easily find the removable information storage medium in the actual cabinet by using the storage location image.

Further, the information managing apparatus of the present invention may further include transmission control means for transmitting the library information to another communication device which is communicable with the information managing apparatus.

This allows the user to use the library information created by the main apparatus (information managing apparatus) on the another communication device which is communicable with the information managing apparatus.

Furthermore, the information managing apparatus of the present invention may further include detection means for detecting, ejection of the removable information storage medium in which the content is stored, and the display control means may cause at least the storage-area information and the storage-location information corresponding to the ejected removable information storage medium to be displayed, in a case where the detection means detects the ejection of the removable information storage medium.

This allows the user to recognize (i) the storage area in which the information storage medium was originally stored and (ii) the storage location in which the removable information storage medium was originally stored. Therefore, it is possible for the user to easily return the removable information storage medium to the position where the removable information storage medium was originally stored.

Moreover, the information managing apparatus of the present invention may be arranged such that an identification-information transmitting section is attached to the removable information storage medium in which the content is stored or a storage case for storing the removable information storage medium, which identification-information transmitting section wirelessly transmits medium identification information for identifying the information storage medium, and the information managing apparatus may further include (i) receiving control means for receiving the medium identification information, wirelessly transmitted from the identification-information transmitting section, and (ii) medium searching means for searching for, on the basis of the library information, information storage medium in which specific content is stored from among a plurality of information storage media, and (iii) informing means which, in a case where an information storage medium corresponding to the medium identification information received by the receiving control means is the information storage medium searched by the medium searching means, informs the user of such a fact.

This allows the user to recognize there is the information storage medium searched by the medium searching means within a distance in which the receiving control means can receive the wirelessly-transmitted medium identification information. Further, by referring to both the storage-area information and the storage-location information, it is possible to find the removable information storage medium in which a desired content is stored more easily.

Further, a communication device of the present invention, which is communicable with the information managing apparatus described above, may include information updating means for updating the library information received from the information managing apparatus, the information updating means generating storage-area information indicating the storage area in which the information storage medium in which the content is stored is stored, and causing the storage-area information thus generated to be included in the library information.

Furthermore, the communication device of the present invention may be arranged such that the information updating means (i) generates storage-location information indicating the storage location in which the removable information storage medium in which the content is stored is stored, the storage location being in the storage area in which the removable information storage medium is stored, and (ii) causes the storage-location information to be included in the library information.

This makes it possible to update the library information including the storage-area information and/or the storage-location information on the communication device which is communicable with the information managing apparatus. Therefore, the user can select one of the information managing apparatus and the communication device so as to edit the library information, if necessary. This improves convenience for the user to manage the removable information storage medium.

Moreover, an information storage medium of the present invention may be a removable information storage medium including at least a first information recording layer and a second information recording layer, the first information recording layer being a layer which allows additional-recording of information or rewriting of information, the second information recording layer being a layer which allows reading-out of information only, the first information recording layer including a library information storage region in which library information is storable, the library information (i) being used to manage content and another removable information storage medium in which the content is stored so that the content and the another removable information medium are associated with each other, and (ii) including at least storage-area information indicating a storage area in which the another information storage medium is stored and storage-location information indicating a storage location of the another removable information storage medium in the storage area, the second information recording layer storing in advance cabinet information which (i) is used to update the library information and (ii) indicates a specification of a cabinet in which the another removable information storage medium is stored.

Accordingly, for example, by using the information storage medium of the present invention in the information managing apparatus described above, it becomes possible for the user to update the library information by use of the cabinet information without the user carrying out troublesome operations such as updating the library information. Therefore, the user can have information such as "what would it be like if the cabinet is replaced with a new cabinet and the removable information storage medium is placed in the new cabinet".

Further, by use of the library information updated on the basis of the cabinet information, the user can easily find and purchase a cabinet that suits user's taste. Furthermore, the information storage medium of the present invention can allow a furniture maker to promote sales of its products. Accordingly, it is possible for the user to simplify storage management of the removable information storage medium.

Further, the present invention can be expressed as described below.

Further, the information managing apparatus of the present invention may further include information generation means for generating the storage-area information.

This allows the information managing apparatus to generate the storage-area information without another device or the like. Therefore, it is possible for the user to further simplify the storage management of the removable information storage medium.

Furthermore, the information managing apparatus of the present invention may further include storage-area determination means for determining a specific storage area from among a plurality of storage areas which have been set in advance, the information generation means generating the storage-area information so that the storage area in which the information storage medium is stored is the specific storage area determined by the storage-area determination means.

According to the arrangement, the storage-area determination means determines (automatically) the specific storage area from among the plurality of storage areas which have been set in advance, and the information generation means generates (automatically) the storage-area information so that the storage area in which the information storage medium is stored is the specific storage area thus determined. This makes it unnecessary for the user to carry out troublesome operations such as determining the storage area manually.

Moreover, the information managing apparatus may be arranged such that the storage-area determination means determines the specific storage area in accordance with user's selection.

According to the arrangement, it is possible for the user to select a desired storage area from among the plurality of storage areas.

Further, the information managing apparatus of the present invention may further include display control means for carrying out control to cause the storage-area information to be displayed so that a correspondence relationship between the information storage medium and the storage area in which the information storage medium is stored is viewable.

According to the arrangement, the storage-area information is caused to be displayed by the display control means so that the user can view the correspondence relationship between the information storage medium in which the content is stored and the storage are in which the information storage medium is stored. Therefore, it is possible fro the user to easily know where the information storage medium in which the content is stored is stored.

Furthermore, the information managing apparatus of the present invention may be arranged such that the information generation means generates storage-location information indicating a storage location that indicates where the information storage medium is stored in the storage area in which the information storage medium is stored.

According to the arrangement, the user can know, on the basis of the storage-location information, the storage location that indicates where the information storage medium is stored in the storage area. Therefore, it is possible for the user to further simplify the storage management of the removable information storage medium.

Note that the "storage location" denotes a wide concept including a storage location of the information storage medium in a room in a house, and the storage location of the information storage medium in furniture or a furnishing good in the room, such as a library, a disk rack (cabinet), a disk, and a table. For example, the storage location of the information storage medium in a room in a house can be exemplified by "the north corner of the room". Further, the storage location in the library in the room can be exemplified by "the second disk from the left on the top shelf of the library", for example. Furthermore, the storage location in the disk rack can be exemplified by "the 14th disk from the left in the group of disks stored in the upper-right zone", for example. Moreover, the storage location in the disk can be exemplified by "the third drawer from the top of the disk", for example. The storage location on the table can be exemplified by "the north corner on the table", for example.

Moreover, the information managing apparatus of the present invention may further include storage-location determination means for determining a specific storage location from among a plurality of storage locations which have been set, in advance, in the storage area in which the information storage medium is stored, the information generation means generating the storage-location information so that the storage location in which the information storage medium is stored is the specific storage location determined by the storage-location determination means (56, 564, 223).

According to the arrangement, the storage-location determination means determines (automatically) specific storage location from among the plurality of storage locations which have been set in the storage area in advance, and the information generation means generates (automatically) the storage-location information so that the storage location in which the information storage medium is stored is the specific storage location thus determined. This makes it unnecessary for the user to carry out troublesome operations such as determining the storage location manually.

Further, the information managing apparatus of the present invention may be arranged such that the storage-location determination means determines the specific storage location in accordance with user's selection.

According to the arrangement, the user can select a desired storage location from among the plurality of storage locations.

Furthermore, the information managing apparatus of the present invention may further include display control means for carrying out control to cause the storage-area information and the storage-location information to be displayed so that (i) a correspondence relationship between the information storage medium in which the content is stored and the storage area in which the information storage medium is stored is viewable and (ii) a correspondence relationship between the information storage medium in which the content is stored and the storage location in which the information storage medium is stored is viewable.

According to the arrangement, (i) the storage-area information is caused to be displayed by the display control means so that the user can view the correspondence relationship between the information storage medium in which the content is stored and the storage area in which the information storage medium is stored, and (ii) the storage-location information is caused to be displayed by the display control means so that the user can view the correspondence relationship between the information storage medium in which the content is stored and the storage location in which the information storage medium is stored. Therefore, the user can know, in detail, where the information storage medium in which the content is stored is stored.

Moreover, the information managing apparatus of the present invention may be arranged such that the information generation means (56, 565, 223) (i) generates a cabinet image which is an image of a cabinet in which the information storage medium is stored, the cabinet being placed in the storage area in which the information storage medium is stored, (ii) divides an image region of the cabinet image into a plurality of divisional areas in accordance with how many information storage media are storable in the cabinet, (iii) generates a storage-location image that virtually shows where the information storage medium is stored in the cabinet in such a manner that a specific divisional area selected from among the plurality of divisional areas is displayed in a manner different from the other divisional areas of the plurality of divisional areas, and (iv) determines the storage-location image thus generated as the storage-location information.

According to the arrangement, the information generation means generates the cabinet image which is the image of the cabinet in which the information storage medium is stored, the cabinet being placed in the storage area. Further, the information generation means divides the image region of the cabinet image into a plurality of divisional areas in accordance with how many information storage media are storable in the cabinet. Furthermore, the information generation means generates the storage-location image that virtually shows where the information storage medium in which the content is stored is stored in the cabinet in such a manner that a specific divisional area selected from among the plurality of divisional areas is displayed in a manner different from the other divisional areas of the plurality of divisional areas. The information generation means causes the storage location image thus generated to serve as the storage-location information.

This allows the user to virtually know where the information storage medium is stored in the actual cabinet on the basis of a position of the selected divisional area displayed in the image region of the cabinet image. Therefore, it is possible for the user to find the information storage medium in the actual cabinet more easily by use of the storage-location image.

Further, the information managing apparatus of the present invention may further include transmission control means for transmitting the storage-area information and the storage-location information to another communication device that is communicable with the information managing apparatus.

According to the arrangement, it is possible to use the storage-area information and the storage-location information not only on the information managing (the information managing apparatus that generated the storage-area information and the storage-location information) but also on another communication device that is communicable with the information managing apparatus.

Furthermore, the information managing apparatus of the present invention may further include detection means for detecting ejection of the information storage medium in which the content is stored, the display control means carrying out control so that the storage-area information and the storage-location information both of which correspond to the information storage medium thus ejected are displayed, in a case where the detection means detects the ejection of the information storage medium.

According to the arrangement, the display control means carries out control so that, in a case where the detection means detects the ejection of the information storage medium, the storage-area information and the storage-location information both of which correspond to the information storage medium thus ejected are displayed. This allows the user to recognize which storage area and which storage location the information storage medium was originally stored in. Therefore, it is becomes possible for the user to easily return the information storage medium to the storage location in which the information storage medium was originally stored.

Moreover, the information managing apparatus of the present invention may be arranged such that an identification-information transmitting section for wirelessly transmitting medium identification information for identifying the information storage medium is attached to, in advance, the information storage medium in which the content is stored or a storage case in which the information storage medium is stored, the information managing apparatus further including: receiving control means for receiving the medium identification information wirelessly transmitted from the identification-information transmitting section; medium searching means for searching for, from among a plurality of information storage media, an information storage medium in which specific content is stored; informing means for informing that the information storage medium corresponding to the medium identification information received by the receiving control means is the information storage medium in which the specific content searched by the medium searching means is stored, in a case where the information storage medium corresponding to the medium identification information is the information storage medium in which the specific content is stored.

According to the arrangement, the receiving control means receives the medium identification information wirelessly transmitted from the identification-information transmitting section that is attached to the information storage medium or the storage case in which the information storage medium is stored. Further, the informing means informs the user of the fact that the information storage medium corresponding to the medium identification information received by the receiving control means is the information storage medium searched by the medium searching means, in a case where the information storage medium corresponding to the medium identification information is the information storage medium searched by the medium searching means.

This allows the user to recognize the presence of the information storage medium searched by the medium searching means within a distance in which the receiving control means can receive the medium identification information wirelessly transmitted.

Further, by referring to both the storage-area information and the storage-location information, it is possible for the user to find the information storage medium in which desired content is stored, more easily.

Moreover, a communication device of the present invention, which is communicable with the information managing apparatus described above, may include receiving control means for receiving the storage-area information or the storage-location information from the information managing apparatus.

This makes it possible to use the storage-area information and the storage-location information not only on the information managing apparatus but also on the communication device which is communicable with the information managing apparatus. Therefore, the user can select one of the information managing apparatus and the communication device. This is convenient for the user.

Note that the information generation means of the information managing apparatus can be realized by a computer. In this case, the scope of the present invention encompasses (i) an information generation program which causes the computer to function as the information generation means so as to generate the storage-area information and/or the storage-location information and (ii)a computer-readable storage medium in which the information generation program is stored.

### [Additional Matter]

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

The present invention is applicable to an electronic device or a system each of which has a library display function. The present invention is suitably applicable to an information display apparatus, an information recording/reproducing apparatus, and an information recording/reproducing system in which the above apparatuses work together. Specifically, the present invention is widely applicable to devices such as a digital TV connected to a recording device, a BD recorder-built-in digital TV, and a portable terminal which is communicable with each of these devices.

### Reference Signs List

- 1:: Optical disk apparatus (information managing apparatus, communication Device)
- 2:: Portable terminal (communication device, information managing apparatus)
- 6:: Disk recognizing section (detection means)
- 20:: First information recording layer (layer on which information is additionally-recordable or information is rewritable)
- 28:: Searching process section (medium searching means)
- 29:: Vibrating section (informing means)
- 30:: Intermediate layer
- 40:: Second information recording layer (information-readable layer)
- 41:: Editing program (information generation program)
- 53:: Communication control section (receiving control means, transmission control means)
- 54:: Reproduction/display control section (display control means)
- 56:: Library information managing section (information generation means, storage-area determination means, storage-location determination means)
- 57:: Recording control section (recording control means)
- 200:: Optical disk
- 201:: Disk case (storage case)
- 202:: Wireless IC (identification-information transmitting section)
- 221:: Communication control section (receiving control means, transmission control means)
- 222:: Recording control section (recording control means)
- 223:: Library information managing section (information generation means, storage-area determination means, storage-location determination means)
- 224:: Reproduction/display control section (display control means)
- 421:: Content/medium identification information (medium identification information)
- 422:: Rack-storage-area information (storage-area information, storage-location information)
- 423:: Rack information (cabinet information)
- 424:: Editing image information (cabinet Image)
- 563:: Storage-area determination section (storage-area determination Means)
- 564:: Medium-storage-location determination section (storage-location determination means)
- 565:: Library-information generation section (information generation means)

## Claims

1. An information managing apparatus (1, 2) for managing where a removable information storage medium is stored, comprising:
recording control means (57, 222) for carrying out control so that storage-area information is stored, the storage-area information being used to manage an information storage medium in which content is stored and a storage area in which the information storage medium is stored in such a manner that the information storage medium and the storage area are associated with each other.

2. The information managing apparatus as set forth in claim 1, further comprising:
information generation means (56, 565, 223) for generating the storage-area information.

3. The information managing apparatus as set forth in claim 2, further comprising:
storage-area determination means (56, 563, 223) for determining a specific storage area from among a plurality of storage areas which have been set in advance,
the information generation means (56, 565, 223) generating the storage-area information so that the storage area in which the information storage medium is stored is the specific storage area determined by the storage-area determination means (56, 563, 223).

4. The information managing apparatus as set forth in claim 3, wherein:
the storage-area determination means (56, 563, 223) determines the specific storage area in accordance with user's selection.

5. The information managing apparatus as set forth in any one of claims 1 through 4, further comprising:
display control means (54, 224) for carrying out control to cause the storage-area information to be displayed so that a correspondence relationship between the information storage medium in which the content is stored and the storage area in which the information storage medium is stored is viewable.

6. The information managing apparatus as set forth in any one of claims 2 through 4, wherein:
the information generation means (56, 565, 223) generates storage-location information indicating a storage location that indicates where the information storage medium is stored in the storage area in which the information storage medium is stored.

7. The information managing apparatus as set forth in claim 6, further comprising:
storage-location determination means (56, 564, 223) for determining a specific storage location from among a plurality of storage locations which have been set in advance in the storage area in which the information storage medium is stored,
the information generation means (56, 565, 223) generating the storage-location information so that the storage location in which the information storage medium is stored is the specific storage location determined by the storage-location determination means (56, 564, 223).

8. The information managing apparatus as set forth in claim 7, wherein:
the storage-location determination means (56, 564, 223) determines the specific storage location in accordance with user's selection.

9. The information managing apparatus as set forth in claim 7 or 8, further comprising:
display control means (54, 224) for carrying out control to cause the storage-area information and the storage-location information to be displayed so that (i) a correspondence relationship between the information storage medium in which the content is stored and the storage area in which the information storage medium is stored is viewable and (ii) a correspondence relationship between the information storage medium in which the content is stored and the storage location in which the information storage medium is stored is viewable.

10. The information managing apparatus as set forth in claim 9, wherein:
the information generation means (56, 565, 223) (i) generates a cabinet image which is an image of a cabinet in which the information storage medium is stored, the cabinet being placed in the storage area in which the information storage medium is stored, (ii) divides an image region of the cabinet image into a plurality of divisional areas in accordance with how many information storage media are storable in the cabinet, (iii) generates a storage-location image that virtually shows where the information storage medium is stored in the cabinet in such a manner that a specific divisional area selected from among the plurality of divisional areas is displayed in a manner different from the other divisional areas of the plurality of divisional areas, and (iv) determines the storage-location image thus generated as the storage-location information.

11. The information managing apparatus as set forth in any one of claims 6 through 10, further comprising:
transmission control means (53, 221) for transmitting the storage-area information and the storage-location information to another communication device (2, 1) that is communicable with the information managing apparatus (1, 2).

12. The information managing apparatus as set forth in claim 9 or 10, further comprising:
detection means (6) for detecting ejection of the information storage medium in which the content is stored,
the display control means (54) carrying out control so that, in a case where the detection means (6) detects the ejection of the information storage medium, the storage-area information and the storage-location information both of which correspond to the information storage medium thus ejected are displayed.

13. The information managing apparatus as set forth in claim 9 or 10, wherein:
an identification-information transmitting section (202) for wirelessly transmitting medium identification information for identifying the information storage medium is attached to, in advance, the information storage medium in which the content is stored or a storage case (201) in which the information storage medium is stored,
the information managing apparatus further comprising:
receiving control means (221) for receiving the medium identification information wirelessly transmitted from the identification-information transmitting section (202);
medium searching means (28) for searching for, from among a plurality of information storage media, an information storage medium in which specific content is stored;
informing means (29) for informing that the information storage medium corresponding to the medium identification information received by the receiving control means (221) is the information storage medium searched by the medium searching means (28), in a case where the information storage medium corresponding to the medium identification information is the information storage medium searched by the medium searching means (28) .

14. A communication device (2, 1) which is communicable with an information managing apparatus (1, 2) as set forth in any one of claims 6 through 13, comprising:
receiving control means (53, 221) for receiving the storage-area information or the storage-location information from the information managing apparatus (1, 2).

15. An information generation program for causing a computer to operate,
the information generation program causing the computer to serve as the information generation means (56, 565, 223) of an information managing apparatus (1, 2) as set forth in any one of claims 2 through 4, so as to generate the storage-area information.

16. An information generation program for causing a computer to operate,
the information generation program causing the computer to serve as the information generation means (56, 565, 223) of an information managing apparatus (1, 2) as set forth in any one of claims 6 through 12, so as to generate the storage-location information.

17. A computer-readable storage medium in which an information generation program as set forth in claim 15 or 16 is stored.

18. A removable information storage medium (200) comprising, at least:
a first information recording layer (20) which allows additional recording of information or rewriting of information; and
a second information recording layer (40) which allows reading-out of information only,
the first information recording layer (20) including an information recording region in which (i) storage-area information is storable, the storage-area information being used to manage another storage medium in which content is stored and a storage area in which the another storage medium is stored so that the another storage medium and the storage area are associated with each other and (ii) storage-location information is storable, the storage-location information indicating a storage location that indicates where the another information storage medium is stored in the storage area,
the second information recording layer (40) storing, in advance, cabinet information (423) which indicates a specification of a cabinet in which the another information storage medium is stored, the cabinet information being used to generate the storage-area information and the storage-location information.
